# EUROPEAN PATENT APPLICATION

(11) **EP 2 463 630 A1**
(43) Date of publication of application: **13.06.2012**
(21) Application number: 11193361.0
(22) Date of filing: 13.12.2011
(51) Int. Cl.: G01G 19/393

(54) **Combination weighing apparatus**

(30) Priority: 13.12.2010 JP 2010277016
(71) Applicant: Ishida Co., Ltd., Kyoto-shi, Kyoto 606-8392 (JP)
(72) Inventor: Kishikawa, Mikio, Shiga 520-3026 (JP)
(74) Representative: Hards, Andrew

(57) **Abstract**

A plurality of hoppers are disposed in a circle around a vertical axis, and articles ejected from the plurality of the hoppers are collected in a bottom outlet via a collecting chute and ejected to a packaging machine. The collecting chute is made of at least vertically overlapping stacked chutes, of which the upper chutes are shaped so that the articles ejected from the plurality of the hoppers do not cross articles ejected from adjacent hoppers. The upper chutes have the same angle of inclination, and the upper chutes are disposed in a radial formation around a vertical axis. The lower chute is formed into a funnel shape having no partitions on the inside wall. The center of the inlet and the center of the outlet are displaceable relative to one another.

## Description

### TECHNICAL FIELD

The present invention relates to a collecting chute of a combination weighing apparatus designed so that articles measured to a certain weight are dropped into an inlet chute of a packaging machine via the collecting chute.

### BACKGROUND ART

Packaged snack chips or other bagged products whose contents are set to a certain weight, are measured out by the combination weighing apparatus and dropped into a pillow packaging machine, then formed into bagged products. In a combination weighing apparatus, articles assorted into small portions are weighted by each of a plurality of hoppers, from the plurality of resulting article weights, combinations of articles are gathered which constitute a desired weight, and these combinations are ejected to a packaging machine below. Since the operating speed at this time is a high speed of 90 to 140 bags per minute, various improvements have been made in an attempt to also increase the speed in a collecting chute which bundles together the articles ejected from the plurality of the hoppers of the combination weighing apparatus and expels the articles to the packaging machine.

For example, in JP 5-31532A (Utility model), partitioning plates for preventing the articles from revolving are disposed in a radial formation toward the bottom expelling mouth in the inside wall of a funnel-shaped collecting chute, and articles ejected to the upper inside wall of the collecting chute slide almost directly down along the partitioning plates. In JP 4342192B (JP 2003-267315A) as well, a radial trough is provided to the inside wall of the collecting chute for the same purpose.

However, the inlet chute of the packaging machine disposed directly underneath the collecting chute has a funnel shape which is narrowed to a size that is smaller than the size of the collecting chute of the combination weighing apparatus, and the articles therefore sometimes become clogged up like a bridge at this location. This bridging phenomenon occurs particularly often with light and bulky objects, such as potato chips. Therefore, when such bulky articles are collected, the clogging of articles in the inlet chute is prevented by staggering the expelling timings one at a time rather than expelling the articles all together from the plurality of the hoppers , as is disclosed in JP 1571146B (JP 1-53406A).

### SUMMARY OF THE INVENTION

### Technical Problem

However, to achieve the staggering of the expelling timing disclosed in JP 1571146B with mechanical opening and closing of hopper gates in the case of extremely short time differences in millisecond units, delay in the action of the plurality of the hoppers has an undesirable effect. Therefore, the actual expelling timing staggering increases at least to a set value. Furthermore, since there is also variation in the amounts ejected from each of the plurality of the hoppers, there is an increase in the length of article clusters as they fall through a film tube of the packaging machine, i.e. in the trailing length from articles that come first to articles that come last, which poses a problem in that more time is needed for a certain weight of articles to completely fill a bag. When there is such variation in the article trailing length, another problem is that the sealed portion of the bag digs into the uppermost or last articles.

To avoid such trouble, the only solution is to lower the operating speed, but the problem with this is that productivity decreases as well.

The present invention is intended to resolve such problems, and an object thereof is to provide a new combination weighing apparatus which does not cause bridging in the inlet chute of the packaging machine even when the gate opening and closing timings of the plurality of the hoppers are not staggered, and which can operate at a high speed even with bulky articles such as potato chips.

### Solution to Problem

The above problem of the present invention is solved by a combination weighing apparatus according to claim 1. The advantageous effect of the present invention can be achieved by the subject-matter of dependent claims of the present invention.

To resolve the problems described above, a first preferred embodiment of the present invention is a combination weighing apparatus in which a plurality of hoppers are disposed in a circle around a vertical axis, and articles ejected from the plurality of the hoppers are collected in a bottom outlet via a collecting chute to be ejected to a packaging machine. The combination weighing apparatus is characterized as follows: the collecting chute is composed of at least top and bottom overlapping stacked chutes, of which the upper chute is formed into individual chutes in which articles ejected from the plurality of the hoppers slide almost directly down to the lower chute without crossing articles ejected from adjacent hoppers; the individual chutes have the same angle of inclination, and are disposed in a radial formation around a vertical axis; the lower chute is formed into a funnel shape having no partitions in the inside wall, and the center of the inlet and the center of the outlet are displaced.

Because of such a configuration, the individual chutes cause the articles ejected from the plurality of the hoppers to slide almost directly down and reach the lower chute in the central bottom almost simultaneously, but since the direction from which the articles enter and the direction in which they are ejected by the lower chute are misaligned, articles that have reached the lower chute are subject to the revolving vector from the inside wall of the lower chute, and the articles have different velocities due to the different sliding paths of the articles in the lower chute, whereby articles that have reached the un-partitioned lower chute gather into columns and slide down while revolving around the inside wall of the chute. Moreover, the radius of revolution decreases lower down and the angular velocity of the revolving articles increases accordingly; therefore, articles emitted from the lower chute are dropped into the inlet chute of the packaging machine while spinning.

A second preferred embodiment of the present invention is the combination weighing apparatus of the first aspect, characterized in that two combination weighing apparatuses are provided together, and the apparatuses are integrally joined at the portions that face each other excluding the lower chute.

Because of such a configuration, in a two-base connected combination weighing apparatus having a partial overlap, the upper chutes of the apparatuses have fan shapes in which the portions facing each other are missing, even when articles reach the funnel-shaped lower chutes having no partitions in their inside walls, since the articles do not come from the area where the upper chutes are missing, the articles that reach the lower chutes slide down undisturbed in columns while revolving around the inside walls.

A third preferred embodiment of the present invention is the combination weighing apparatus of the first or second aspect, characterized in that the lower chute is configured from top and bottom level chutes that can be separated, of which at least the lower level chute can be horizontally displaced.

Because of such a configuration, it is possible to form a lower chute with an inclined expelling direction by stacking the upper level chute with a misaligned center axis over the lower level chute. The revolving vector and sliding velocity of the articles sliding down the chutes can be changed merely by horizontally displacing the chutes of both levels.

### Advantageous Effects of the preferred embodiments

According to the first preferred embodiment of the present invention, since the articles ejected from the plurality of the hoppers are collected almost simultaneously by the individual chutes and are then ejected while revolving in the un-partitioned lower chute, even bulky articles can be prevented from forming bridges in the inlet chute of the packaging machine. When the articles slide down the lower chute, the articles have different velocities due to the different sliding paths in the lower chute, whereby articles that have reached the lower chute together are emitted in columns, and clogging in the inlet chute of the packaging machine can thereby be prevented.

Consequently, there is no need to stagger the gate opening and closing timings of the plurality of the hoppers, and the articles can be ejected at shorter time intervals than in the past.

According to the second preferred embodiment of the present invention, in a two-base connected combination weighing apparatus having a partial overlap, the upper chutes of the apparatuses are disposed in fan shapes in which the portions facing each other are missing, even when articles reach the un-partitioned lower chutes all together, the articles do not come from the missing area; therefore, the articles that come from the opposing area slide in columns down the lower chutes undisturbed while revolving around the inside walls.

The consequent effect is that even with bulky products such as potato chips, article clogging in the packaging machine is prevented and the operating rate of the combination weighing apparatus and packaging machine is not reduced.

According to the third preferred embodiment of the present invention, since the lower chute is made of upper and lower level chutes that can be divided, even though the chutes are misaligned and the inlets and outlets are not coaxial, the chutes of both levels can be stacked while being sequentially displaced, and the lower chute can be assembled in a simple manner.

The revolving vector and/or falling velocity of the articles can also be modified merely by sequentially displacing the chutes of both levels horizontally, and it is possible to adjust to a chute where no bridges form according to the properties and ejected amounts of the articles.

### BRIEF DESCRIPTION OF THE DRAWINGS

FIG 1 is an external perspective view of an embodiment of the combination weighing apparatus according to the present invention.
FIG 2 is a partial cross-sectional view of an embodiment of the collecting chute.
FIG 3 is a plan view of an embodiment showing the arrangement configuration of the collecting chute.
FIG 4 is a descriptive drawing for describing the effects of the displacement of the outlet of the bottom chute.

### DESCRIPTION OF THE EMBODIMENTS

An embodiment of the combination weighing apparatus according to the present invention is described herein below based on the drawings.

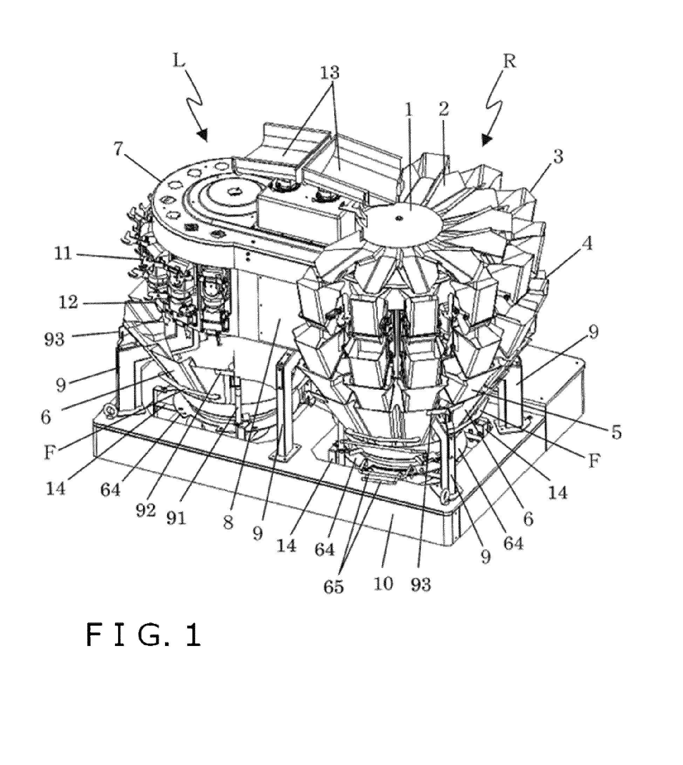

The embodiment shown in FIG 1 is an external perspective view of a two-base connected combination weighing apparatus in which portions that face each other are joined together. In this drawing, the right-side apparatus R is shown as having all its parts mounted, and the left-side apparatus L is shown as all parts other than the collecting chute removed from the main body apparatus.

In the description herein below, the right-side apparatus R alone is described, but the left-side apparatus L has an identical plane-symmetrical structure. Two packaging machines are also disposed as being connected below these apparatuses R, L. The apparatuses R, L operates independently of each other.

The combination weighing apparatus R includes a distribution table 1 disposed in the center top of the apparatus, a plurality of supply feeders 2 arrayed around the table in the manner of a spreading fan, the same number of pool hoppers 3 disposed at the bottoms of the distal ends of each of the supply feeders 2, the same number of weighing hoppers 4 disposed below the pool hoppers 3, the same number of booster hoppers 5 disposed below the weighing hoppers 4, and a collecting chute 6 which is disposed below the booster hoppers 5, which collects articles ejected from the booster hoppers 5, and which expels the articles from bottom outlets.

The pool hoppers 3, the weighing hoppers 4, and the booster hoppers 5 are disposed in respective arcs, each of a predetermined radius. The vertical axes passing through the centers of these arcs are all the same axis. Similarly, the vertical axis passing through the center of the distribution table 1, the vertical axis passing through the center that is the pivot of the fan of the radially spreading supply feeders 2, and the vertical axis of the previously described arcs are all the same axis.

The main frame 7 of the left and right combination weighing apparatuses R, L is integrally joined via a linking portion 8. The main bodies of these apparatuses R, L are mounted on a base 10 via six support legs 9. The main frame 7 has an oval shape in a plan view, at the longer direction of the circular arc part, wherein the drive parts of the supply feeders 2 are attached to the top level, a gate opening and closing unit 11 of the pool hoppers 3 and weighing hoppers 4 is attached to the middle level, and a gate opening and closing unit 12 of the booster hoppers 5 is attached to the bottom level. Inside the gate opening and closing unit 11, the weighing hoppers 4 are supported and a load detector (not shown) is attached for detecting the weight of articles supplied thereto.

When the gate opening and closing units 11, 12 are driven, the gates of the plurality of the hoppers 3, 4, 5 are opened and closed, and the articles supplied to the plurality of the hoppers 3, 4, 5 are ejected downward.

In the center top of the main frame 7, cross feeders 13, 13 are provided on the left and right sides for supplying articles to the left and right distribution tables 1, and above the cross feeders 13, 13 is provided a two-directional distributing apparatus (not shown), from which potato chips or other articles are supplied to the left and right distribution tables 1 via the cross feeders 13, 13.

Articles supplied from the cross feeder 13 to the distribution table 1 flow to the supply feeders 2 around the peripheral edge, due to the reciprocating vertical and arcuate movement of the distribution table 1. In the initial state, the supply feeders 2 are driven all together and articles are supplied to the pool hoppers 3, but when a transition is made to the regular state, the supply feeders 2 of pool hoppers 3 not being supplied with articles are driven, and articles are supplied to the empty pool hoppers 3. For this supplied amount, three to five hoppers are selected each time, and the supply is controlled so that the weight of articles ejected from these hoppers reaches a target weight.

If the lower level weighing hoppers 4 become empty, the gates of the pool hoppers 3 open to supply articles to the empty weighing hoppers 4. After the weighing hoppers 4 have weighted the supplied articles, if the lower level booster hoppers 5 become empty, the gates are opened to supply weighted articles to the booster hoppers 5. At this time, the weight of the weighted articles is sent to the memory of the corresponding booster hoppers 5. In this manner are articles supplied to the plurality of the hoppers 3, 4, 5, and upon the selection of a combination of articles yielding the target weight by a combination calculation, the gates of the booster hoppers 5 are opened, and the articles are ejected to the collecting chute 6 below.

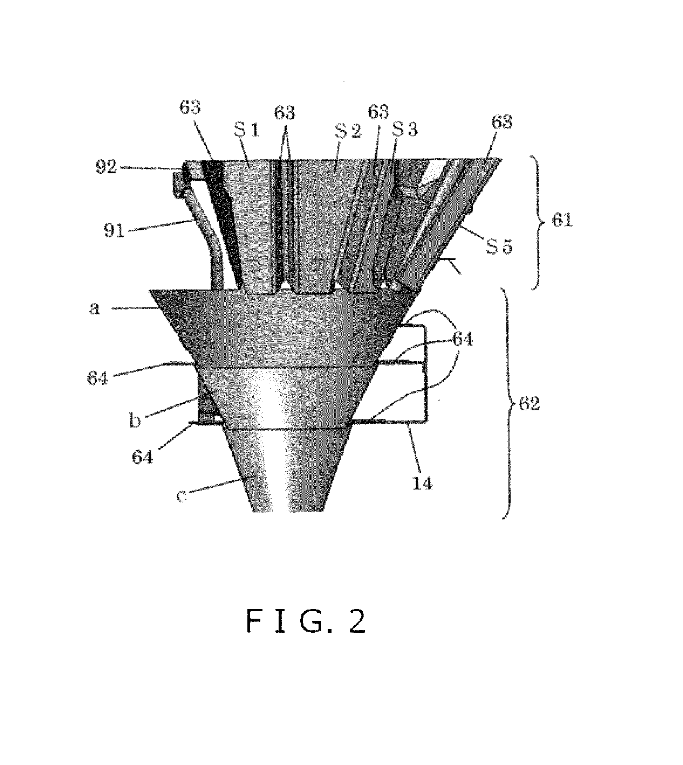

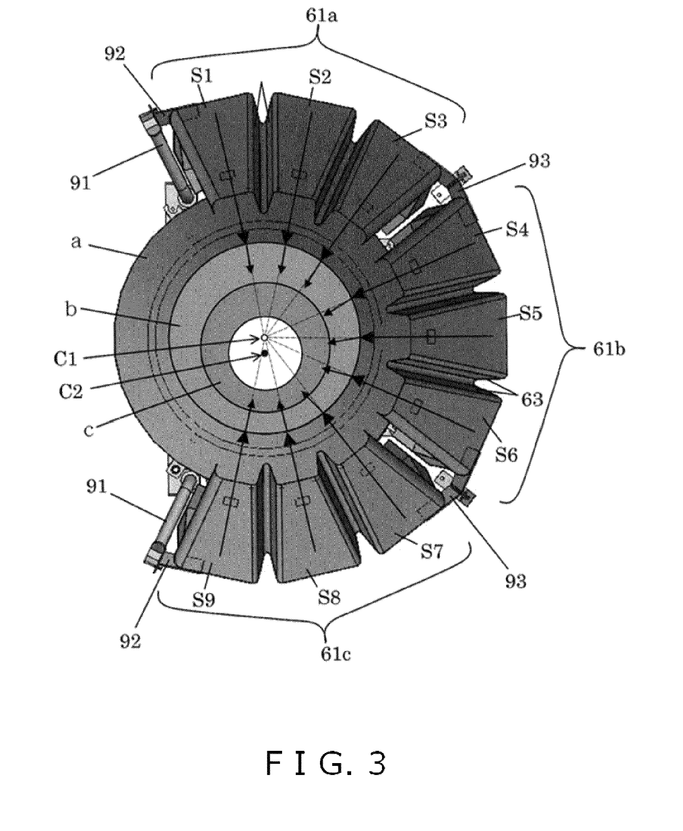

The collecting chute 6 is configured from an upper chute 61 on the top side and a lower chute 62 on the bottom side as shown in FIGS. 2 and 3. The upper chute 61 is formed as a complex of individual chutes S which allow articles ejected from the booster hoppers 5 to slide directly down to the lower chute 62. The lower chute 62 is configured as three funnel-shaped chutes a, b, and c, which is large, medium, and small in size, stacked vertically to form a single chute as a whole.

The upper chute 61 is divided into three parts in a radial direction as shown in FIG 3, and these divided sections 61a, 61b, 61c are each formed as an integration of three adjacent individual chutes S1 to S3, S4 to S6, and S7 to S9. A reinforcing frame F shown in FIG 1 is mounted to the outer walls thereof. Partitions 63 are also provided to both sides of each of the individual chutes S1 to S9. These partitions 63 ensure that articles sliding down the individual chutes S1 to S9 do not enter adjacent individual chutes. These divided sections 61a, 61b, 61c are kept at the same angle of inclination, and their bottom edges are made to face the inside top edge of the lower chute 62.

In FIG 2, the collecting chute 6 is shown as being sectioned by a plane including the aforementioned vertical axis, and the upper chute 61 of FIG 2 is therefore shown with the four topside individual chutes S1, S2, S3, S4 of FIG 3 visible and a center cross section of the next right individual chute S5 visible as well. The divided sections 61a, 61b, 61c of FIG 3 are supported by brackets 92 provided over braces 91 and brackets 93 provided over the support legs 9.

Horizontal flanges 64 are mounted around the entire peripheries of the outer walls of the three large, medium, and small tiered chutes a, b, c constituting the lower chute 62, and these flanges are supported on brackets 14 mounted on the base 10. The second level (middle level) and third level (bottom level) chutes b, c are capable of moving horizontally, and when their positions are settled, the flanges 64 and the brackets 14 are fixed in place by suitable fixing means. The handles 65 shown in FIG 1 are mounted to the flanges 64, and these handles are operated to position, attach, and remove the chutes b, c.

If the mounted positions of the chutes b, c are determined according to the type of articles, the positions of through-holes provided to the flanges 64 and the positions of pins implanted in the brackets 14 may be settled, and the through-holes may be fitted over the pins.

The following is a description, based on FIG 3, of the sliding of articles when the second level and third level chutes b, c are horizontally misaligned.

In FIG 3, the point shown by the white circle C1 represents an imaginary center when the entire lower chute 62 is not displaced (when the lower chute 62 is centered relative to the pool hoppers 3, the weighing hoppers 4, and the booster hoppers 5), and the point shown by the black circle C2 represents the center of the outlet of the third level chute c when the chute c has been displaced. Specifically, a state is shown here in which the center of the outlet of the third level chute c has shifted from C1 to C2 and the second level chute b has slid accordingly.

The vertical axis passing through the imaginary center C1 is coaxial with the vertical axis passing through the center of the arcs of the plurality of pool hoppers 3, weighing hoppers 4, and booster hoppers 5 which are each disposed in an arc.

In FIG 3, articles ejected from the booster hoppers 5 slide down the individual chutes S1 to S9 toward the imaginary center C1 in trajectories shown by the large arrows, but when the articles reach the second level chute b, their directions afterwards change towards the outlet center C2. Therefore, except for articles from the individual chutes S1, S9, their directions change to the directions shown by the small arrows, i.e. toward the left in their direction of travel, and the articles slide while revolving clockwise down the inside walls of the second and third level chutes b, c.

Articles sliding down the individual chutes S1 to S9 reach the second level chute b at approximately the same velocity, but from there the distance and angle of inclination to the outlet of the third level chute c differs depending on the articles' traveling direction, and articles sliding down from the individual chutes S8, S9 are therefore faster than articles sliding down from the individual chutes S1, S2. Therefore, articles sliding down from the individual chutes S8, S9 are closer to an outlet of the chute c and move first out of the chute c, and articles sliding down from the individual chutes S1, S2 have a greater distance to travel and fall out of the chute c thereafter. Consequently, articles that have reached the second and third level chutes b, c slide in columns while revolving down the inside walls of the chutes b, c.

In the above description, the sliding down of articles was described in a case in which articles are ejected simultaneously from the booster hoppers 5, but in this combination weighing apparatus, since articles are ejected from three to five booster hoppers 5 every time, articles flow down only about half of the individual chutes S1 to S9 in a single expelling action. Consequently, when articles are ejected to the three adjacent individual chutes S4 to S6, for example, these articles revolve with virtually no difference in velocity. When articles are ejected to four opposing individual chutes S1, S2, S8, S9, the articles slide down in columns with a difference in velocity rather than revolving.

In any case, the articles can be ejected in columns while rotating or with a difference in velocity depending on the traveling direction of the articles, and clogging in the inlet chute disposed at the bottom can therefore be prevented.

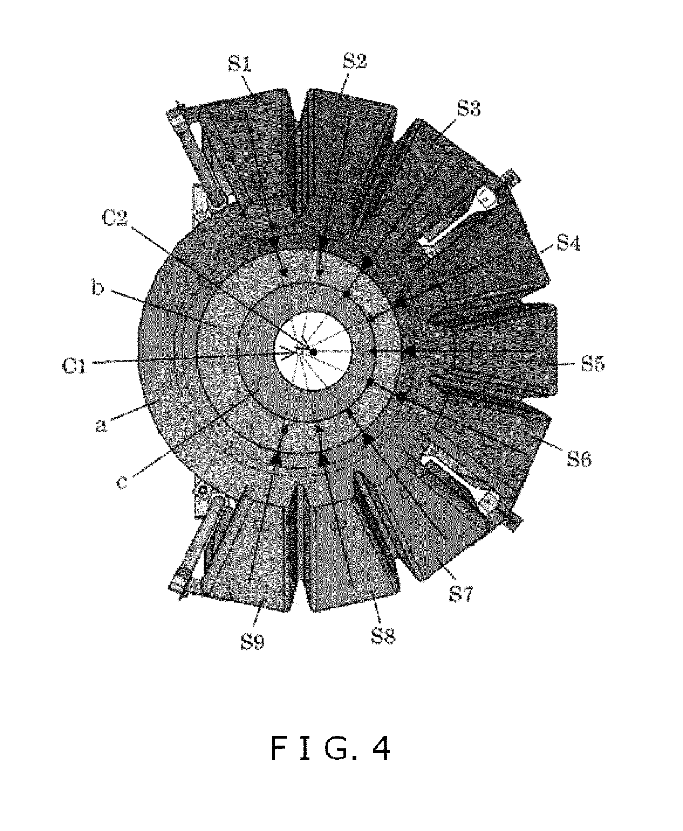

FIG 4 shows a case in which the second and third level chutes b, c have been shifted to the right in the drawing. In this drawing, the articles ejected from the booster hoppers 5 slide down the individual chutes S1 to S9 toward the imaginary center C1 in the trajectories shown by the large arrows, but when the articles reach the second level chute b, the articles change direction from this point towards the outlet center C2. Specifically, articles sliding down the individual chutes S1 to S4 change direction to the left in their traveling directions as shown by the small arrows, and articles sliding down the individual chutes S6 to S9 change direction to the right in their traveling directions. Consequently, the articles from the individual chutes S1 to S4 and the articles from the individual chutes S6 to S9 collide in the outlet near the individual chute S5.

However, since the sliding articles have different sliding distances and angles of inclinations in the chutes b, c in their traveling directions, the sliding velocity from the center individual chute S5 is the highest, and the velocity sequentially decreases farther away from this chute. Consequently, articles sliding down from the individual chutes reach the lower chute 62 at approximately the same velocity, but while sliding down the second and third level chutes b, c, the articles have different velocities, wherein articles from the individual chute S5 come ahead, after which sequentially come articles from the individual chutes S4, S6, articles from the individual chutes S3, S7, articles from the individual chutes S2, S8, and finally articles from the both ends of individual chutes S1, S9. Therefore, the articles, which have slide down radially, slide down in columns through the outlet of the lower chute 62.

In the above description, the sliding down of articles was described in a case in which articles are ejected all together from the booster hoppers 5, but articles flow down only about half of the individual chutes S1 to S9 in an actual expelling action; therefore, when articles are ejected to three adjacent individual chutes S1 to S3, for example, these articles slide down while revolving. When articles are ejected to four opposing individual chutes S1, S2, S8, S9, adjacent articles have different velocities, articles from the individual chutes S2, S8 come ahead, articles from the individual chutes S1, S9 come next, and these articles all slide down the lower chute 62 in columns.

Consequently, in this embodiment, the articles can be realigned and ejected in columns in the outlet of the lower chute 62 even if the gate opening and closing timings of the booster hoppers 5 are not staggered. Moreover, in this embodiment, since there is no large variation in expelling at different times by the opening and closing of the gates of the plurality of the hoppers, the articles can be dropped into the packaging machine with a shorter distance from the first articles to the last articles.

In the embodiment described above, the second and third level chutes b, c were displaced, but depending on the articles, it is also possible to displace one more level chute as well, and to thereby cause the articles to revolve more effectively and create a difference in velocity.

Instead of sequentially displacing the chutes b, c in one direction, it is also possible, depending on the articles, to displace all of the chutes a, b, c in different directions and to yield a stronger revolving force and greater time difference in the articles sliding down.

In the embodiment described above, the right-side apparatus R was described, but since the left-side apparatus L is plane-symmetrical, the same operational effects can of course be achieved in the left-side apparatus L as well.

Furthermore, the present invention can be applied not only in a two-base connected combination weighing apparatus, but can be similarly applied in the case of single-body combination weighing apparatus as well. In the embodiment described above, the booster hoppers 5 were provided below the weighing hoppers 4, but it is also possible to design a combination weighing apparatus that does not have booster hoppers and has only upper level pool hoppers 3 and lower level weighing hoppers 4.

### REFERENCE SIGNS LIST

- 3: pool hoppers
- 4: weighing hoppers
- 5: booster hoppers
- 6: collecting chute
- 61: upper chute
- 62: lower chute
- S: individual chute
- R: right-side combination weighing apparatus
- L: left-side combination weighing apparatus

## Claims

1. A combination weighing apparatus comprising
a main frame (7),
a plurality of hoppers (3, 4, 5) disposed in a circle around a vertical axis of the main frame,
a support base (10) for supporting the main frame, and
a collecting chute (6) for collecting articles ejected from the plurality of the hoppers and expelling the articles to an outlet there below; wherein
the collecting chute (6) includes an upper chute (61) and a lower chute (62) disposed below the upper chute;
the upper chute has a plurality of individual chutes (S1 to S9) formed in positions corresponding to the plurality of the hoppers, the individual chutes being positioned so that articles ejected from the plurality of the hoppers slide down substantially directly to the lower chute without crossing each other; and
the lower chute (62) is configured such that the center of the outlet and the center of the inlet are capable of undergoing horizontal displacement relative to each other.

2. The combination weighing apparatus according to claim 1, wherein the individual chutes (S1 to S9) provided with the upper chute (61) are positioned so as to be inclined at substantially the same angle of inclination relative to the vertical axis.

3. The combination weighing apparatus according to claim 1 or 2, wherein the lower chute (62) is configured such that a center of the outlet of the lower chute is movable to a position horizontally offset from the vertical axis of the main frame.

4. The combination weighing apparatus according to claim 1, 2 or 3, wherein the lower chute has no partitions on an inside wall thereof and has a funnel shape whose mouth diameter decreases from the inlet to the outlet.

5. The combination weighing apparatus according to any one of claims 1 to 4, further comprising:
a second weighing apparatus supported on the main frame (7) and the support base (10), the second weighing apparatus having a plurality of second hoppers, and a second collecting chute including a second upper chute and a second lower chute disposed below the second upper chute.

6. The combination weighing apparatus according to any one of claims 1 to 5, further comprising a partitioning member provided to each side of the plurality of individual chutes of the upper chute (61) so that articles sliding down the individual chutes enter into a corresponding lower chute (62).

7. The combination weighing apparatus according to any one of claims 1 to 6, wherein the lower chute (62) has a first conical part (a) and a second conical part (b) disposed beneath the first conical part, and the first conical part and second conical being separable from one another; and
of these conical parts, a cone axis of at least the second conical part can undergo horizontal displacement.

8. The combination weighing apparatus according to claim 7, wherein
the lower chute (62) further has a third conical part (c) disposed beneath the second conical part (b);
the first conical part, the second conical part, and the third conical part form a three-tiered funnel shape of large, medium, and small size, respectively; and
the first conical part, the second conical part, and the third conical part are configured such that cone axes of the second conical part and third conical part are capable of undergoing horizontal displacement relative to one another.

9. The combination weighing apparatus according to claim 7 or 8, further comprising a flange (64) is provided around each of the external peripheries of each conical part;
a bracket (14) for fixing the flange in place is provided to the support base; and
the positions of the brackets and the flanges are configured to be adjustable in such a manner that any one of the cone axes of the first conical part, the second conical part, and the third conical part can undergo horizontal displacement relative to one another.

10. The combination weighing apparatus according to claim 9, wherein
the flange (64) is provided with a plurality of mounting holes;
the bracket (14) is provided with a plurality of pins; and
the mounting holes and the pins are formed in such a manner that the positions where the mounting holes and the pins fit together can be adjusted.

11. The combination weighing apparatus according to any one of claims 1 to 10, wherein
the individual chutes of the upper chute (61) are divided radically into three sections by support brackets (92, 93), and
individual divided sections (61a, 61b, 61c) are supported by a reinforcing frame (F).
